# EUROPÄISCHE PATENTSCHRIFT

(11) **EP 2 269 760 B1**
(45) Veröffentlichungstag und Bekanntmachung des Hinweises auf die Patenterteilung: **25.03.2020**
(21) Anmeldenummer: 10006228.0
(22) Anmeldetag: 16.06.2010
(51) Int. Cl.: B23K 11/06

(54) **Verfahren und Schweissvorrichtung zur Beurteilung der Schweissstromstärke beim Behälterzargenschweissen**
Method and welding device for analysing the welding electric current for container clamp welding
Procédé et dispositif de soudage destinés à déterminer la force du flux de soudage lors du soudage de dormants de récipient

(30) Priorität: 02.07.2009 CH 10272009
(43) Veröffentlichungstag der Anmeldung: 05.01.2011
(60) Teilanmeldung: 12002254.6
(73) Patentinhaber: Soudronic AG, 8962 Bergdietikon (CH)
(72) Erfinder: Müller, Willi, 8966 Oberwil-Lieli (CH); Dieterich, Daniel, 8335 Hittnau (CH)
(74) Vertreter: Naiu, Radu Mircea

(56) Entgegenhaltungen:
- EP-A2- 2 110 196
- CH-A5- 653 786
- US-A- 5 291 423

## Beschreibung

### Hintergrund

Die Erfindung betrifft ein Verfahren zur Beurteilung der angewandten Schweissstromstärke beim elektrischen Widerstandsnahtschweissen von Überlappnähten von aufeinander folgenden Behälterzargen einer Produktionsserie. Ferner betrifft die Erfindung eine Schweissvorrichtung für die Widerstandsnahtschweissung von Behälterzargen, umfassend Schweissrollen, einen Schweissstromgenerator und eine Schweissstromsteuerung sowie eine Einrichtung zur mehrmaligen Erfassung der entlang der Schweissnaht einer Behälterzarge in diese eingebrachten elektrischen Energie und/oder zur mehrmaligen Erfassung der Temperatur der Schweissnaht einer Behälterzarge entlang der Schweissnaht.

### Stand der Technik

Zur Ermittlung des Schweissbereichs, insbesondere zur Qualitätskontrolle und allfälliger Anpassung des Schweissstroms während der laufenden Produktion einer Serie von Behälterzargen, ist es üblich, während der Produktion eine geschweisste Zarge zu entnehmen und mittels visueller Kontrolle und mechanischer Festigkeitsprüfung festzustellen, ob die Schweissung zu heiss oder zu kalt erfolgt ist. Entsprechend dem Prüfresultat kann die Schweissmaschine gestoppt, der Strom geändert und erneut geschweisst und geprüft werden. Da es sich um einen iterativen Prozess handelt, sind dessen Dauer und der Materialverbrauch bzw. Probezargenverbrauch stark von der Erfahrung der Bedienungsperson abhängig.

Bereits für die anfängliche Einstellung der Schweissstromstärke für das Widerstandsnahtschweissen von Behälterzargen beim Produktionsbeginn einer Produktionsserie von Zargen ist es üblich, Probeschweissungen mit kleinen Zargenserien aus dem jeweiligen zu schweissenden Blechmaterial durchzuführen, wobei, wie in der Produktion, mit konstanter Schweissstromstärke des dabei angewandten Schweisswechselstroms gearbeitet wird. Die geschweissten Zargen einer solchen kleinen Serie werden dann ebenfalls durch mechanische Festigkeitskontrolle (z.B. Aufreissen der geschweissten Überlappnaht) und visuelle Kontrolle untersucht. Ist die Schweissstromstärke bei der Probeschweissung zu tief eingestellt gewesen, bzw. war die Schweisstemperatur zu tief, so geht die Naht leicht auf, da keine genügende Materialaufschmelzung erzielt worden ist, was auch als "Kleben" bezeichnet wird. Ist hingegen die Schweissstromstärke bei der Probeschweissung zu hoch eingestellt, so erfolgt die Schweissung mit zu hoher Temperatur und es entstehen im Schweissbereich Krater und flüssiges Zargen- oder Schweisselektrodenmaterial lagert sich als "Spritzer" entlang der Naht ab. Dies macht die Zarge für die weitere Verwendung unbrauchbar. Nach solchen Probeschweissungen, bei welchen von der Bedienungsperson in der Regel sowohl Testzargen mit "klebenden" Schweissnähten als auch Testzargen mit Schweissnähten mit "Spritzern" erzeugt werden, wird dann die Schweissstromstärke festgelegt, die für die Serienproduktion von Zargen aus dieser Blechsorte angewandt wird. Dabei wird die Schweissstromstärke im Bereich zwischen "Kleben" und "Spritzern" mit ca. 2/3 Abstand vom zu tiefen Wert und somit ca. 1/3 Abstand vom zu hohen Wert eingestellt. Bei diesem iterativen Vorgehen sind der Zeitaufwand und der Materialverbrauch durch die Probeserien stark von der Grösse des Schweissbereichs des Zargenmaterials und der Erfahrung der Bedienungsperson der Zargenschweissmaschine abhängig. In EP 2 110 196 A2, das ein Art. 54(3) EPÜ Dokument darstellt, wird es vorgeschlagen, bei Produktionsbeginn eine Testzarge mit einem fallenden oder ansteigenden Schweissstromwert zu schweissen und dann diese Testzarge visuell und mechanisch zu untersuchen. Damit kann die Anzahl der vor Produktionsbeginn verbrauchten Zargen zur Ermittlung des Schweissstromes verringert werden. Die Beurteilung der Schweissung während der Produktion wird dadurch aber nicht verbessert. Diese erfolgt weiterhin durch die Entnahme und Kontrolle einer in der Produktion geschweissten Zarge. Aus US 5 291 423 A ist eine Einrichtung zur Überwachung der Schweissnahtqualität beim Dosenschweissen bekannt, mittels welcher Schweissparameter erfasst und statistisch ausgewertet werden. Aus CH 653 786 A5 ist eine Einrichtung zur kontinuierlichen Überwachung der Schweissqualität beim Dosenschweissen bekannt, welche die eingebrachte Schweissenergie und die Temperatur jedes Schweisspunktes messen kann.

### Darstellung der Erfindung

Der Erfindung liegt die Aufgabe zu Grunde, ein besseres und somit in der Regel rascheres und jedenfalls Material sparenderes Verfahren zur Überprüfung der Schweissstromstärke während der Schweissung der Produktionsserie von Behälterzargen zu schaffen. Ferner liegt der Erfindung die Aufgabe zu Grunde, eine Schweissvorrichtung zur Durchführung des Verfahrens zu schaffen.

Diese Aufgabe wird bei dem eingangs genannten Verfahren dadurch gelöst, dass durch eine Steuerung der Widerstandsschweissmaschine während der Produktion eine erste Reihe von aufeinander folgenden Behälterzargen mit einer vorbestimmten, im Wesentlichen konstanten Schweissstromstärke geschweisst wird, dass nach dieser Reihe Behälterzargen mindestens eine einzelne Behälterzarge aus der Produktionsserie durch die Steuerung mit während der Nahtschweissung fallender oder steigender Schweissstromstärke geschweisst wird und dass bei dieser Schweissung mehrfach die elektrische Energie ermittelt wird und/oder mehrfach die Temperatur der Schweissnaht ermittelt wird, und dass anhand der ermittelten elektrischen Energiewerte und/oder der ermittelten Temperaturwerte jeweils die Stromstärkengrenze bestimmt wird, ab welcher Schweissstromstärke die Schweissung der einzelnen Behälterzarge zu kalt und ab welcher Schweissstromstärke die Schweissung zu heiss erfolgt ist, und dass auf Grund dieser Bestimmung ein bevorzugter Wertebereich oder ein bevorzugter Wert für die Schweissstromstärke innerhalb dieser Grenzen bestimmt wird.

Es wird somit auf Grund von Messwerten während einer speziellen Schweissung mit fallender oder ansteigender Schweissstromstärke innerhalb der Produktionsserie bestimmt, wo die Grenzen der Schweissstromstärke für zu kalte bzw. zu heisse Schweissung liegen und es kann somit auf die visuelle Kontrolle und mechanische Festigkeitsprüfung verzichtet werden. Somit kann auch ein Anwender mit wenig Erfahrung in der Schweisstechnik und ohne besondere Kenntnisse über die Systemeigenschaften (z.B. Produktionsgeschwindigkeit, Schweissdruck) und die Beschaffenheit des zu schweissenden Blechmaterials beurteilen, ob die derzeit angewandte bzw. eingestellte Schweissstromstärke während der Produktion in einem geeigneten Bereich liegt oder nicht. Manipulationsfehler sind dabei ausgeschlossen, da keine mechanische Prüfung und visuelle Kontrolle erfolgen muss. Ferner werden Stillstandszeiten der Produktionslinie vermieden und die Maschineneffizienz wird erhöht.

In einer bevorzugten Ausführungsform wird aufgezeichnet, ob die für die Produktionsserie angewandte Schweissstromstärke im derart ermittelten bevorzugten Bereich liegt oder den bevorzugten Wert hat oder nicht. Damit kann eine sichere Qualitätskontrolle erfolgen, welche automatisch ohne visuelle Kontrolle und mechanische Festigkeitsprüfung abläuft und eine programmgesteuerte nachvollziehbare Aufzeichnung für die Qualitätssicherung ermöglicht.

Bei einer weiteren bevorzugten Ausführungsform wird, vorzugsweise automatisch, geprüft, ob die für die Produktionsserie angewandte Schweissstromstärke im bevorzugten Bereich oder einem angestrebten Unterbereich innerhalb des bevorzugten Bereichs liegt oder den genauen bevorzugten Wert hat und wenn dies nicht der Fall ist, so wird, bevorzugt ebenfalls automatisch durch die Steuerung, ein neuer Schweissstromwert eingestellt, welcher dann auf die Behälterzargen der Produktionsserie angewandt wird, welche auf die mit dem fallenden oder steigenden Strom geschweisste Behälterzarge folgen. Dadurch können Veränderungen von schweissstromrelevanten Einflussfaktoren durch eine einfache Nachjustierung, welche vorzugsweise automatisch erfolgt und insbesondere periodisch erfolgen kann, kompensiert.

Bei der Schweissvorrichtung wird die Aufgabe dadurch gelöst, dass durch die Schweissstromsteuerung und/oder den Schweissstromgenerator die Schweissstromstärke während der Schweissung der Naht einer Behälterzarge änderbar ist und dass durch die Einrichtung zur mehrmaligen Erfassung und die Schweissstromsteuerung eine zu heisse Schweissung und eine zu kalte Schweissung ermittelbar ist, die sich durch den ändernden Schweissstrom ergibt.

Dadurch ergeben sich die beim Verfahren erwähnten Vorteile. Bevorzugte Ausführungsformen der Schweissvorrichtung sind in den abhängigen Patentansprüchen beansprucht und ergeben die bei den bevorzugten Verfahren geschilderten Vorteile.

### Kurze Beschreibung der Zeichnungen

Im Folgenden werden Ausführungsbeispiele der verschiedenen Aspekte der Erfindung anhand der Zeichnungen näher erläutert. Dabei zeigt
Figur 1 schematisch die Schweissung einer Anzahl von Behälterzargen einer Produktionsserie und den dabei aufgebrachten Schweissstrom;
Figur 2 eine schematische Ansicht einer Schweissnaht einer Behälterzarge und des Verlaufs der Schweissstromstärke (in Ampere) über der Naht bzw. über die Zeit;
Figur 3 eine weitere schematische Darstellung einer Schweissnaht einer Behälterzarge und des Verlaufs der Schweissstromstärke zur Erläuterung eines bevorzugten Ausführungsbeispiels der Erfindung;
Figur 4 schematisch eine Schweissvorrichtung zur Widerstandsnahtschweissung von Behälterzargen gemäss der Erfindung;
Figur 5 die Ansicht des Bildschirms der Einrichtung zur Erfassung der elektrischen Schweissenergie und/oder der Temperatur bei der Schweissung.

### Wege zur Ausführung der Erfindung

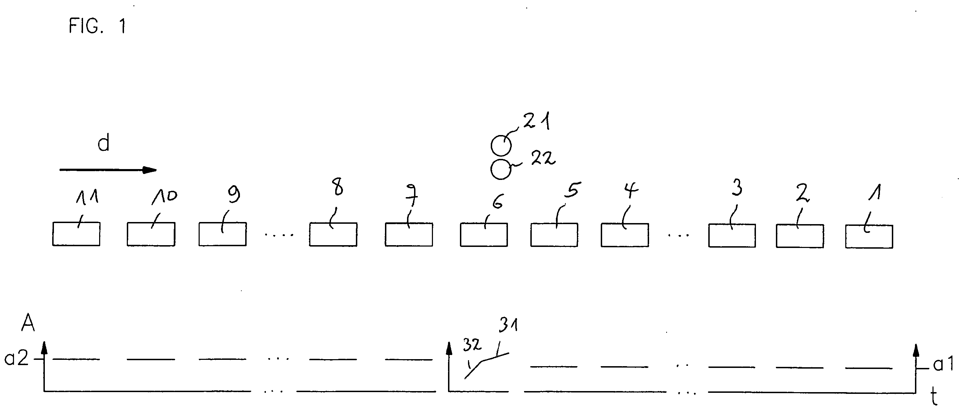

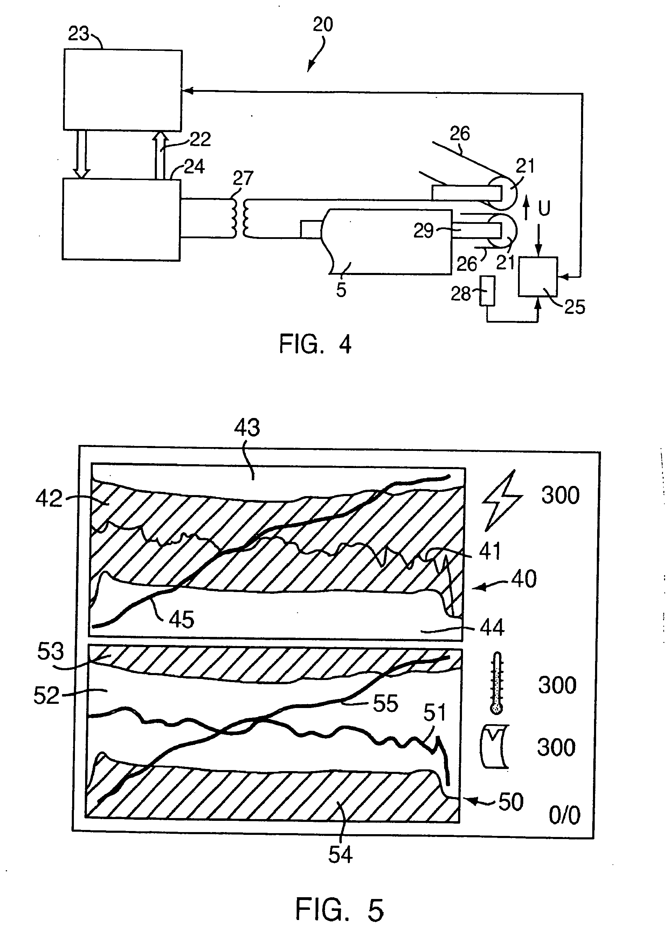

Figur 1 zeigt schematisch eine Abfolge von Behälterzargen 1 bis 11 einer Produktionsserie von Behälterzargen. Die Behälterzargen werden insbesondere auf einer Widerstandsschweissmaschine gemäss Figur 4 geschweisst, von welcher in Figur 1 nur die Schweissrollen 21 und 22 dargestellt sind. Die einzelnen Behälterzargen gelangen als Rohlinge von einem Rundapparat her in die Schweissvorrichtung und durchlaufen diese in Richtung des Pfeils d. Die Behälterzargenrohlinge 11 bis 7 sind somit in der schematischen Ansicht von Figur 1 noch nicht geschweisst, die Behälterzarge 6 wird gerade geschweisst und die Behälterzargen 5 bis 1 sind bereits geschweisst worden.

Die Schweissung der Reihe Behälterzargen 1 bis 5 ist auf bekannte Weise mit einer im Wesentlichen konstanten Schweissstromstärke vorgenommen worden. Unterhalb der Behälterzargen ist der Schweissstromverlauf über der Zeit grob schematisch dargestellt. Die vertikale Achse stellt die Schweissstromstärke in Ampere (A) dar, die horizontale Achse die Zeit t. Es ist dargestellt, dass die Reihe Behälterzargen 1 bis 5 mit einem im Wesentlichen konstanten Schweissstrom mit der Stärke a1 geschweisst worden ist. Dieser Schweissstrom ist vor Beginn der Herstellung der Produktionsserie ermittelt worden. Dies auf bekannte Weise, wie eingangs erwähnt und insbesondere gemäss dem Vorgehen, wie es in EP 2 110 196 A2 geschildert ist. Diese Ermittlung und Einstellung des Schweissstromes und insbesondere der Schweissstromstärke vor Produktionsbeginn der Serienproduktion bildet aber nicht Gegenstand der vorliegenden Erfindung. Der Schweissstrom ist bekanntermassen ein Wechselstrom, der entlang der Schweissnaht eine grosse Anzahl einzelner Schweisslinsen erzeugt, die zusammen die Schweissnaht bilden, die eine dichte Verschweissung der Längsnaht der Behälterzargen ergibt. Dies ist bekannt und muss hier nicht weiter erläutert werden. Wie eingangs erläutert, ist die Schweissstromstärke (in Ampere) ein wesentlicher Aspekt, ob die Schweissung korrekt erfolgt oder ob durch zu kalte Schweissung eine nur "klebende" Schweissnaht mangelhafter Dichtheit erzeugt wird oder ob durch zu heisse Schweissung eine Schweissnaht mit "Spritzern" erzeugt wird, welche für die Weiterverarbeitung der Behälterzarge nicht brauchbar ist. Während der Schweissung der Produktionsserie wird nun wie folgt vorgegangen, um zu beurteilen, ob die anfänglich ermittelte und eingestellt Stromstärke a1 eine korrekte Schweissnaht erzeugt oder nicht. Diese Beurteilung ist insbesondere zur Qualitätssicherung bzw. zur Dokumentation einer korrekten Herstellung verwendbar, andererseits zur Anpassung der Schweissstromstärke während der Herstellung der Produktionsserie von Behälterzargen, da sich die Schweissbedingungen während der Produktionsserie ändern können.

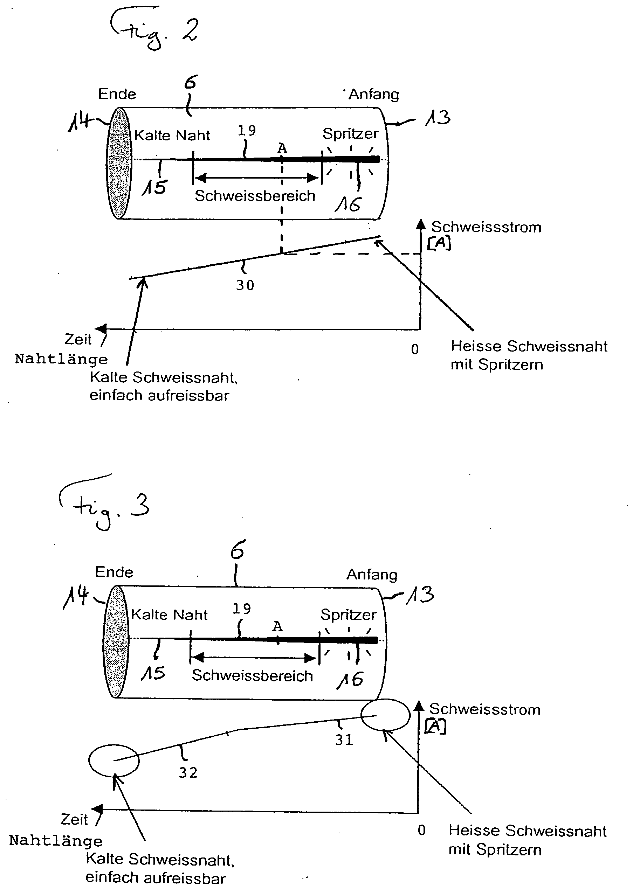

Gemäss der Erfindung wird nun nach einer Reihe Behälterzargen 1 - 5, die mit der konstanten Schweissstromstärke a1 geschweisst worden sind, mindestens eine Behälterzarge 6 mit einem fallenden oder ansteigenden Verlauf der Schweissstromstärke geschweisst. Diese spezielle Schweissung kann periodisch nach einer vorbestimmten Anzahl Behälterzargen der Reihe, z.B. jeweils nach 500 oder nach 1000 bereits geschweissten Behälterzargen erfolgen, oder sie kann zufallsgesteuert nach einer zufälligen Anzahl Zargen erfolgen, oder sie wird durch die Bedienungsperson ausgelöst. Die Figuren 2 und 3 zeigen zwei verschiedene Varianten, wie diese Schweissung mit fallender oder steigender Schweissstromstärke erfolgen kann.

Figur 2 und Figur 3 zeigt jeweils schematisch die Behälterzarge 6 aus der Serie von Figur 1 mit Draufsicht auf die Schweissnaht sowie unterhalb der Zarge 6 den Verlauf der Schweissstromstärke über der Schweisszeit t bzw. über der Nahtlänge L. Gemäss der Erfindung wird die Stärke des Schweissstromes während der Schweissung der Zarge 6 entlang der Überlappschweissnaht fallend oder ansteigend geändert. In dem gezeigten Beispiel von Figur 2 fällt die Schweissstromstärke 30 während der Schweisszeit bzw. über die Nahtlänge ab und verringert sich somit von einem hohen Anfangswert zu einem tiefen Schlusswert. Der Schweissstrom ist dabei, wie erwähnt, auf bekannte Weise beim Behälterzargenschweissen ein Wechselstrom, in der Regel mit höherer Frequenz als der Netzspannungsfrequenz, was dem Fachmann bekannt ist und hier nicht weiter erläutert wird. Entlang der Schweissnaht 19 der Behälterzarge 6 aus der Serie wird von deren Anfang 13 bis zu deren Ende 14 (auf die Transportrichtung der Zarge gemäss Pfeil d von Figur 1 bezogen) eine Überlappungsschweissnaht erzeugt, bei welcher sowohl ein Bereich 16 mit zu hoher Schweisstemperatur und dem Auftreten von "Spritzern" gebildet wird, als auch ein Bereich 15 mit zu tiefer Schweisstemperatur, bei der eine kalte Schweissnaht bzw. eine sogenannte "klebende" Naht erzeugt wird, welche keine genügende Verschweissung ergibt. Zwischen diesen Bereichen 16 und 15 liegt dann durch die Änderung der Schweissstromstärke ein Schweissbereich 19, in welchem eine Verschweissung ohne Spritzer und mit genügender Schweisstemperatur erzeugt wird. Bei der gezeigten Darstellung wird die höhere Schweissstromstärke am Anfang der Zarge verwendet und der Schweissstrom 30 bzw. dessen Stärke fällt zum Ende der Naht bzw. zum Ende 14 der Zarge hin ab. Auch ein umgekehrtes Vorgehen ist möglich, bei welchem mit einer geringen Schweissstromstärke am Anfang 13 der Zarge begonnen wird und die Schweissstromstärke entlang der Naht ansteigt. Dann würde sich der Bereich 15 am Anfang 13 der Zarge befinden und der Spritzerbereich 16 am Ende 14 der Zarge. Dazwischen würde wieder ein korrekter Schweissbereich 19 gebildet. Auf die erfindungsgemässe Weise kann somit eine Behälterzarge 6 in der Produktionsserie gebildet werden, welche den gesamten Schweissstrombereich von zu hoher Schweissstromstärke bis zu zu geringer Schweissstromstärke bei der Naht der einen Zarge 6 aufweist. Bei einer bevorzugten Ausführungsform wird so vorgegangen, dass mit dem hohen Strom begonnen wird, wie dies in Figur 2 dargestellt ist.

Figur 3 zeigt ein weiteres bevorzugtes Ausführungsbeispiel, das auch in Figur 1 dargestellt ist, wobei die vorstehenden Erläuterungen auch hier gelten. Gleiche Bezugszeichen bezeichnen auch wiederum gleiche Elemente. Bei dieser Ausführungsform wird nicht mit einer konstant abfallenden oder ansteigenden Schweissstromstärke 30 geschweisst, sondern mit einem Stromverlauf, welcher mindestens zwei verschiedene Steigungen und entsprechend einen Knickpunkt (wie dargestellt) oder mehrere Knickpunkte aufweist. In Figur 3 sind die beiden Abschnitte 31 und 32 des Stromstärkeverlaufs über die Nahtlänge bzw. Schweisszeit dargestellt. Im Bereich des höheren Stromes ist dabei die Steigung der abfallenden Rampe geringer und im Bereich des tieferen Stromes 32 ist die Steigung grösser. Dadurch kann erreicht werden, dass die Spritzergrenze zwischen den Bereichen 16 und 19 auf der Naht mit höherer Auflösung erzeugt wird.

Figur 4 zeigt schematisch eine Widerstandsnahtschweissmaschine oder Rollnahtschweissmaschine 20, welche die beiden Schweissrollen 21 und 22 aufweist, zwischen denen die Naht der Behälterzargen (gezeigt ist als Beispiel die Zarge 5) auf bekannte Weise geschweisst wird. Auf den Schweissrollen können Drahtzwischenelektroden 26 laufen. Die untere Schweissrolle 22 ist an einem Schweissarm 29 gelagert und wird von dem Schweissstromgenerator 24 über den Schweisstransformator 27 mit dem Schweissstrom versorgt. Durch einen Sensor oder auch durch eine in den Schweissstromgenerator integrierte Detektion, kann dieser bekanntermassen erkennen, wenn die Zarge zwischen die Schweissrollen gelangt ist. Der Schweissstromgenerator steuert dann das Anlegen des Schweissstromes an die obere Schweissrolle 21. Dies ist dem Fachmann bekannt und wird hier nicht weiter erläutert. Eine Steuerung 23 kann ferner den Schweissstromgenerator 24 steuern und diesem periodisch oder zufällig für die eine Zarge 6 den gewünschten rampenförmigen Verlauf des Schweissstromes aufprägen, der in diesem Fall in der Steuerung als Vorgabewert enthalten ist. Der rampenförmige Verlauf kann aber auch im Schweissstromgenerator selber abgelegt und durch ein externes Signal für die Schweissung aktivierbar sein. Ein prozessorgesteuerter Schweissstromgenerator, der ein erfindungsgemässes Vorgehen ermöglicht, ist ein Schweissstromgenerator vom Typ Pulsar oder UNISOUD der Firma Soudronic, Bergdietikon, Schweiz. Die Steuerung 23 kann ferner auch die jeweils momentan an die Schweissrollen abgegebene Stromstärke ermitteln, sei dies durch Messung oder durch.Vergleich der Schweisszeit bzw. Schweissnahtlänge mit dem Stromstärkesollwert entsprechend der Rampe. In Figur 4 ist als Variante dargestellt, dass die Leitungen von der Steuerung 23 zum Generator 24 auch in Gegenrichtung ein Stromstärkeausgangssignal des Generators an die Steuerung 23 liefern können. Alternativ kann eine separate Stromstärkemesseinrichtung vorgesehen sein, welche die Stärke des Schweissstromes an die Steuerung liefert.

Gemäss der Erfindung wird während der Schweissung der Behälterzarge 6 mit dem fallenden bzw. steigendem Stromstärkewert die elektrische Energie gemessen, die in die Schweissnaht eingebracht wird und/oder die Temperatur der Schweissnaht gemessen, um die Grenze des zu heiss geschweissten Bereichs 16 zum korrekt geschweissten Bereich bzw. die Grenze des korrekt geschweissten Bereichs zum zu kalt geschweissten Bereich 15 auf Grund vorgegebener Grenzwerte für die Energie bzw. die Temperatur zu ermitteln. In Figur 4 ist dazu eine Einrichtung 25 schematisch dargestellt, welche mehrmalig während der Schweissung der Behälterzarge 6 die elektrische Schweissenergie ermitteln kann und/oder die Temperatur der Schweissnaht ermitteln kann. Zur Temperaturermittlung kann insbesondere ein IR-Thermometer 28 vorgesehen sein, welches mit der Einrichtung 25 verbunden ist oder ein Teil derselben ist. Zur Ermittlung der elektrischen Energie kann die Einrichtung 25 während der Schweissung mehrmals die Spannung U zwischen den Schweisselektroden und insbesondere zwischen den Schweissrollen 21, 22 messen. Da ferner der momentane Schweissstrom bekannt ist, kann die momentane Energie ermittelt werden. Dies kann in der Einrichtung 25 erfolgen, indem die Steuerung 23 den Stromwert an die Einrichtung 25 liefert (oder dies durch den Schweissstromgenerator 24 erfolgt). Andernfalls kann auch die Einrichtung 25 den Spannungswert U an die Steuerung 23 liefern und diese ermittelt die elektrische Energie. Die Einrichtung 25 kann auch selber den Schweissstrom messen. Eine handelsübliche Einrichtung 25 ist insbesondere der "Weld Monitor" SWM-2 der Firma Soudronic, Bergdietikon, Schweiz. Diese Einrichtung 25 erlaubt es, die elektrische Energie in jeder Schweisslinse zu berechnen, indem sie den jeweiligen Spannungsabfall zwischen den Schweissrollen für jede Schweisslinse misst und den Schweissstrom für jede Schweisslinse berücksichtigt. Ferner erlaubt es diese Einrichtung 25 bzw. dieser "Weld Monitor" die von der Schweissnaht ausgehende Wärmestrahlung 2000 Mal pro Sekunde abzutasten.

Figur 5 zeigt die Darstellung eines Teils der Bedienungs- und Anzeigeoberfläche dieser bekannten Einrichtung 25. Für die vorliegende Erfindung ist dabei nur die elektrischen Energie von Bedeutung, die mit der Darstellung im Feld 40 erläutert werden kann bzw. die Temperatur der Schweissnaht, die mit der Darstellung im Feld 50 erläutert werden kann, weshalb auf die anderen Teile bzw. Symbole der Bedienungs- und Anzeigeoberfläche des "Weld Monitor" nicht eingegangen wird, bzw. diese in der Figur weggelassen worden sind.

Das Feld 40 zeigt die ermittelte elektrische Schweissenergie jeder Schweisslinse während der Schweissung einer Behälterzarge. Die Kurve 41 zeigt dabei z.B. die Schweissung einer Behälterzarge 1 bis 5 mit dem konstanten Schweissstrom a1 von Figur 1. Im Feld 40 ist dabei ein Bereich 42 ersichtlich, der den erfahrungsgemäss zulässigen Bereich der Energie darstellt und es ist ein Bereich 43 ersichtlich, in dem die in die Schweissnaht eingebrachte elektrische Energie zu hoch ist bzw. ein Bereich 44, in dem die in die Schweissnaht eingebrachte elektrische Energie zu gering ist. Entsprechend würden im Bereich 43 auf der Schweissnaht "Spritzer" erzeugt und im Bereich 44 würde eine "klebende" Schweissnaht erzeugt. Es bestehen somit Grenzwerte für die elektrische Energie, die diese Bereiche voneinander Trennen. Diese Grenzwerte sind dem Fachmann bekannt bzw. in der Einrichtung 25 gespeichert. Es ist ersichtlich, dass die Kurve 41 für die Zargen 1 bis 5 innerhalb des Bereichs 42 verläuft und somit mit der eingestellten Schweissstromstärke al korrekt geschweisst wird. Dieselbe Erkenntnis ergibt sich aus der Temperaturmessung der Schweissnaht bzw. der Temperaturkurve 51, die sich im zulässigen Bereich 52 der Temperatur bewegt und den Bereich zu hoher Temperatur 53 ("Spritzerbereich") bzw. den Bereich zu tiefer Temperatur 54 ("Kleberbereich") nicht erreicht. Auch dafür sind also entsprechende Grenzwerte bekannt und in der Einrichtung 25 gespeichert. Die erwähnten Grenzwerte können auch in der Steuerung 23 enthalten sein, so dass diese den Vergleich der aktuell gemessenen Werte für Energie und Temperatur mit den Grenzwerten durchführt. Die Anzeige, sofern eine solche vorgesehen ist, erfolgt, wie dargestellt mit der Einrichtung 25 und/oder über die Anzeigeeinheit der Steuerung 23. Die Einrichtung 25 kann somit auch vollständig durch die Steuerung 23 ersetzt werden, indem die Steuerung 23 die genannten Funktionen ausführt.

Wird während der Serieproduktion die Behälterzarge 6 mit dem fallenden oder ansteigenden Stromverlauf geschweisst, ergeben sich Messwerte für die eingebrachte Schweissenergie bzw. für die Temperatur, welche die zu hohe Schweissstromstärke bzw. die zu tiefe Schweissstromstärke angeben. Wird dies wieder in einem Kurvenverlauf dargestellt so ergibt sich ein abweichender Kurvenverlauf in den Feldern 40 bzw. 50, bei der die eingebrachte elektrische Energie und die Temperatur in den "Spritzerbereich" und den "Kleberbereich" gelangen. Dies ist als Beispiel ebenfalls in Figur 5 mit den Kurven 45 bzw. 55 eingezeichnet. Es wird in diesem Beispiel dargestellt, dass mit dem fallenden Verlauf gemäss Figur 2 geschweisst wird und zunächst ist somit die eingebrachte elektrische Energie zu gross bzw. die Schweissnahttemperatur zu hoch, so dass die Kurve 45 im Bereich 43 beginnt bzw. die Kurve 55 im Bereich 53. Gegen Ende der Schweissnaht bei reduzierter Schweissstromstärke liegt die Kurve 45 dann im Bereich 44 und die Kurve 55 liegt im Bereich 54. Es liegen somit durch die Energiemessung und/oder die Temperaturmessung Messwerte vor, welche angeben, ob die Schweissstromstärke einen zu hohen oder zu tiefen Wert hat, wenn diese mit den Grenzwerten für die Bereichsübergänge 43-42 bzw. 42-44 verglichen werden oder mit den Bereichsübergängen 53-52 bzw. 52-54. Somit kann durch die Energie- und/oder Temperaturmessung bei der Schweissung der einen Zarge 6 mit fallendem (oder mit steigendem Verlauf der Schweissstromstärke) der Bereich der Schweissstromstärke bestimmt werden, in welchem eine korrekt verschweisste Schweissnaht erzeugt wird bzw. der Bereich 19 auf der Naht. Ausgehend von den Grenzen dieses Bereichs kann dann ein engerer Bereich oder ein genauer Wert für die Schweissstromstärke angenommen werden. Z.B. kann ein schmaler Bereich für die Schweissstromstärke als guter Bereich beurteilt werden, der in der Mitte zwischen den Grenzen liegt oder es kann ein anzustrebender Wert angenommen werden, der den zulässigen Bereich im Verhältnis 2/3 zu 1/3 teilt und näher bei der Spritzergrenze liegt, wie dies eingangs als üblich erwähnt worden ist. Diese Beurteilung auf Grund der Messung der Schweissung der einzelnen Behälterzarge 6 erlaubt es jeweils während der Produktion und ohne Produktionsunterbruch zu beurteilen, wo der bevorzugte Stromstärkebereich aktuell liegt. Diese Beurteilung kann dann auf verschiedene Weise verwendet werden.

Dies kann anhand einer bevorzugten Ausführungsform erläutert werden, die in Figur 1 schematisch ersichtlich ist. Wie dargelegt, ist dabei mit der Stromstärke a1 geschweisst worden. Auch dabei kann der "Weld Monitor" wirksam gewesen sein, um für einzelne Zargen eine Abweichung festzustellen und diese allenfalls aus dem Produktionsprozess auszuscheiden. Nach einer gewissen Anzahl der Zargen der Reihe (die mit den Zargen 1 - 5 angedeutet ist), welche Anzahl z.B. 500 oder 1000 oder 5000 betragen kann, erfolgt dann die Schweissung der einzelnen Zarge mit der fallenden (oder ansteigenden) Schweissstromstärke (hier die Behälterzarge 6). Es wird somit auf die oben erläuterte Weise beurteilt, welchen Wert aktuell die gewünschte Stromstärke in der Produktion haben sollte und es kann damit geprüft werden, ob der Stromstärkewert al noch in dem gewünschten Bereich der Stromstärke oder bei dem gewünschten genauen Wert der Stromstärke liegt, der sich aus den Energiemessungen und/oder Temperaturmessungen bei der Schweissung der Zarge 6 ergibt. Die Steuerung, die die Messungen auswertet und dann den gewünschten Bereich oder den gewünschten Wert berechnet, kann somit den ursprünglichen Einstellwert a1 mit dem Bereich oder dem Wert vergleichen. Liegt a1 in dem gewünschten Stromstärkebereich oder in einem vorbestimmten Abstand zum gewünschten Wert, so belässt die Steuerung die Stromstärke für die Schweissung der folgenden Behälterzargen 7 bis 11 (bzw. für die Schweissung der nächsten 500 oder 1000 oder 5000 Zargen, bis wieder eine einzelne Zarge 6 mit fallendem (oder ansteigendem) Strom geschweisst wird) auf dem Wert a1. Stellt die Steuerung hingegen fest, dass der Wert a1 ausserhalb des gewünschten Bereichs liegt, der sich aus der Messung bei der Schweissung der Zarge 6 ergeben hat oder zu weit weg vom gewünschten genauen Wert der Stromstärke liegt, der sich aus der Messung bei der Schweissung der Zarge 6 ergeben hat, so stellt die Steuerung eine neue Schweissstromstärke a2 ein, welche im Bereich liegt bzw. den genauen Wert annimmt. Dies ist in Figur 1 dargestellt, indem für die Zargen 7 bis 11 nun die höhere Stromstärke a2 eingestellt worden ist.

Bei einer anderen Ausführungsform, wird, wenn a1 ausserhalb des gewünschten Bereichs liegt, der sich aus der Messung bei der Schweissung der Zarge 6 ergeben hat, oder wenn a1 zu weit weg vom gewünschten genauen Wert der Stromstärke liegt, der sich aus der Messung bei der Schweissung der Zarge 6 ergeben hat, der Wert a1 aber weiterhin zu einer Kurve 41 oder 51 innerhalb des Bereichs 42 oder 52 führt, lediglich die Abweichung von a1 von der gewünschten Schweissstromstärke aufgezeichnet, um ein Protokoll zur Qualitätssicherung zu erzeugen.

Beide Ausführungsformen können auch kombiniert sein, so dass bei geringen Abweichungen lediglich aufgezeichnet bzw. protokolliert wird und bei vorbestimmt grösseren Abweichungen zusätzlich ein neuer Stromstärkewert a2 eingestellt wird.

In der einfachsten Ausführungsform wird lediglich beurteilt, wo a1 liegt, es wird aber nichts unternommen bzw. es wird diese Beurteilung lediglich als Information an die Bedienungsperson gegeben, so dass diese daraus Schlüsse für allfällige Änderungen der Einstellungen ziehen kann.

## Patentansprüche

1. Verfahren zur Beurteilung der angewandten Schweissstromstärke (a1) beim elektrischen Widerstandsnahtschweissen von Überlappnähten von aufeinander folgenden Behälterzargen (1-11) einer Produktionsserie, **dadurch gekennzeichnet, dass** durch eine Steuerung der Widerstandsschweissmaschine während der Produktion eine erste Reihe von aufeinander folgenden Behälterzargen (1-5) mit einer vorbestimmten, im Wesentlichen konstanten Schweissstromstärke (a1) geschweisst wird, dass nach dieser Reihe Behälterzargen (1-5) durch die Steuerung mindestens eine einzelne Behälterzarge (6) aus der Produktionsserie mit während der Nahtschweissung fallender oder steigender Schweissstromstärke (30; 31, 32) geschweisst wird und dass bei dieser Schweissung mehrfach die elektrische Energie ermittelt wird und/oder mehrfach die Temperatur der Schweissnaht ermittelt wird, und dass anhand der ermittelten elektrischen Energiewerte und/oder der ermittelten Temperaturwerte auf Grund vorgegebener Grenzwerte für die Energie bzw. die Temperatur bestimmt wird, ab welcher Schweissstromstärke die Schweissung der einzelnen Behälterzarge (6) zu kalt erfolgt ist und ab welcher Schweissstromstärke die Schweissung zu heiss erfolgt ist und dass auf Grund dieser Bestimmung ein bevorzugter Bereich für die Schweissstromstärke innerhalb dieser Grenzen bestimmt wird.

2. Verfahren nach Anspruch 1, **dadurch gekennzeichnet, dass** weiter geprüft wird, ob die eingestellte konstante Schweissstromstärke (a1) in einem vorbestimmten Abstand zu der Schweissstromstärke für zu kalte und der Schweissstromstärke für zu heisse Schweissung liegt und insbesondere, ob die eingestellte Schweissstromstärke im bevorzugten Bereich liegt.

3. Verfahren nach Anspruch 2, **dadurch gekennzeichnet, dass** die Lage der eingestellten konstanten Schweissstromstärke (a1) für Qualitätssicherungszwecke aufgezeichnet wird, und insbesondere periodisch ermittelt und aufgezeichnet wird.

4. Verfahren nach einem der Ansprüche 1 bis 3, **dadurch gekennzeichnet, dass** nach der Schweissung der einzelnen Behälterzarge (6) eine geänderte im Wesentlichen konstante Schweissstromstärke (a2) eingestellt wird, welche zwischen der Schweissstromstärke der zu kalten und der Schweissstromstärke der zu heissen Schweissung liegt und in Abhängigkeit von diesen Schweissstromstärken gewählt wird, und dass diese neue im Wesentlichen konstante Schweissstromstärke (a2) für eine auf die einzelnen Behälterzarge (6) folgende Reihe von Behälterzargen (7-11) der Produktionsserie angewandt wird.

5. Verfahren nach einem der Ansprüche 1 bis 4, **dadurch gekennzeichnet, dass** die Schweissstromstärke (30) bei der Schweissung der mindestens einen Behälterzarge (6) im Wesentlichen linear abfallend oder ansteigend gewählt wird, oder dass die Schweissstromstärke bei der Schweissung der mindestens einen Behälterzarge (6) mindestens zwei Bereiche (31, 32) mit unterschiedlicher Steigung des Abfallens oder Ansteigens aufweist.

6. Verfahren nach einem der Ansprüche 1 bis 5, **dadurch gekennzeichnet, dass** die elektrische Energie ermittelt wird, indem für jede Schweisslinse oder ausgewählte Schweisslinsen der Schweissnaht der Schweissstrom und der elektrische Spannungsabfall über den Schweisselektroden (21, 22) ermittelt wird.

7. Schweissvorrichtung (20) für die Widerstandsnahtschweissung von Behälterzargen (1-11), umfassend Schweissrollen (21, 22), einen Schweissstromgenerator (24) und eine Schweissstromsteuerung (23) sowie eine Einrichtung (25) zur mehrmaligen Erfassung der elektrischen Energie entlang der Schweissnaht einer Behälterzarge (6) und/oder zur mehrmaligen Erfassung der Temperatur der Schweissnaht entlang der Schweissnaht einer Behälterzarge, **dadurch gekennzeichnet, dass** durch die Schweissstromsteuerung (23) und/oder den Schweissstromgenerator (24) die Schweissstromstärke während der Schweissung der Naht einer Behälterzarge (6) änderbar ist und dass durch die Einrichtung (25) zur mehrmaligen Erfassung und die Schweissstromsteuerung eine zu heisse Schweissung und eine zu kalte Schweissung durch den sich ändernden Schweissstrom auf Grund vorgegebener Grenzwerte für die Energie bzw. die Temperatur ermittelbar ist, wobei durch die Steuerung der Schweissvorrichtung während der Produktion eine erste Reihe von aufeinander folgenden Behälterzargen mit einer vorbestimmten, im Wesentlichen konstanten Schweissstromstärke schweissbar ist und nach dieser Reihe Behälterzargen mindestens eine einzelne Behälterzarge aus der Produktionsserie mit während der Nahtschweissung fallender oder steigender Schweissstromstärke schweissbar ist.

8. Schweissvorrichtung nach Anspruch 7, **dadurch gekennzeichnet, dass** durch diese ermittelbar ist, ob eine eingestellte im Wesentlichen konstante Schweissstromstärke für die Behälterzargenproduktion in einem vorbestimmten Bereich zwischen der Schweissstromstärke für eine zu kalte Schweissung und der Schweissstromstärke für eine zu heisse Schweissung liegt.

9. Schweissvorrichtung nach Anspruch 7 oder 8, **dadurch gekennzeichnet, dass** durch diese ein im Wesentlichen konstant verlaufender Schweissstrom mit einer Schweissstromstärke (a2) einstellbar ist, welche in einem vorbestimmten Bereich zwischen der Schweissstromstärke für eine zu kalte Schweissung und der Schweissstromstärke für eine zu heisse Schweissung liegt.

10. Schweissvorrichtung nach einem der Ansprüche 7 bis 9, **dadurch gekennzeichnet, dass** der sich ändernde Schweissstrom mit linear abfallender oder ansteigender Stromstärke (30) erzeugbar ist, oder dass der sich ändernde Schweissstrom mit mindestens zwei Stromstärkebereichen (31, 32) mit unterschiedlicher Steigung des Abfallens oder Ansteigens der Stromstärke erzeugbar ist.

11. Schweissvorrichtung nach einem der Ansprüche 7 bis 10, **dadurch gekennzeichnet, dass** durch die Einrichtung (25) zur mehrmaligen Erfassung der elektrischen Energie für jede Schweisslinse oder ausgewählte Schweisslinsen der Schweissnaht der Schweissstrom und der elektrische Spannungsabfall über den Schweisselektroden (21, 22) ermittelbar ist.

12. Schweissvorrichtung nach einem der Ansprüche 7 bis 11, **dadurch gekennzeichnet, dass** durch die Einrichtung (25) zur mehrmaligen Erfassung die Temperatur entlang der Schweissnaht mit einem Infrarot-Thermometer messbar ist.

## Claims

1. Method for assessing the welding current intensity (a1) applied in the electric resistance seam welding of overlap seams of successive container bodies (1-11) of a production series, **characterized in that** during production a first series of successive container bodies (1-5) is welded with a predetermined, substantially constant, welding current intensity (a1) by means of a control of the resistance welding machine, **in that** after this series of container bodies (1-5) at least one individual container body (6) from the production series is welded by the controller with a welding current intensity (30) which decreases or increases during the seam welding (30; 31, 32) and that during this welding the electrical energy is determined several times and/or the temperature of the welding seam is determined several times, and that on the basis of the determined electrical energy values and/or the determined temperature values it is determined, based on the limit values for electric energy and/or the limit values for temperature, from which welding current intensity the welding of the individual container body (6) has been performed too cold and from which welding current intensity the welding has been performed too hot and that on the basis of this determination a preferred range for the welding current intensity is determined within these limits.

2. Method according to claim 1, **characterized in that** it is further verified whether the set constant welding, current intensity (a1) lies at a predetermined distance from the welding current intensity for the too cold welding and the welding current intensity for the too hot welding and in particular whether the set welding current intensity lies in the preferred range.

3. Method according to claim 2, **characterized in that** the position of the set constant welding current intensity (a1) is recorded for quality assurance purposes, and in particular is determined and recorded periodically.

4. Method according to one of claims 1 to 3, **characterized in that** after the welding of the individual container body (6) a changed, substantially constant welding current intensity (a2) is set, which lies between the welding current intensity of the cold welding and the welding current intensity of the hot welding and which is selected as a function of these welding current intensities, and **in that** this new substantially constant welding current intensity (a2) is applied to a series of container bodies (7-11) of the production series following the individual container body (6).

5. Method according to one of claims 1 to 4, **characterized in that** during the welding of the at least one container body (6) the welding current intensity (30) is selected to fall or rise substantially linearly, or **in that** during the welding of the at least one container body (6) the welding current intensity has at least two regions (31, 32) with different gradients of decrease or increase.

6. Method according to one of claims 1 to 5, **characterized in that** the electrical energy is determined by determining the welding current and the electrical voltage drop across the welding electrodes (21, 22) for each welding lens or selected welding lenses of the welding seam.

7. Welding device (20) for resistance seam welding of container bodies (1-11), comprising welding rollers (21, 22), a welding current generator (24) and a welding current control (23) as well as a device (25) for multiple detection of the electrical energy along the welding seam of a container body (6) and/or for multiple detection of the temperature of the welding seam along the welding seam of a container body, **characterized in that** the welding current control (23) and/or the welding current generator (24) can be used to change the welding current intensity during the welding of the seam of a container body (6), and **in that** the device (25) for multiple detection and the welding current control can be used to determine a welding that is too hot and a welding that is too cold by means of the changing welding current on the basis of the determined electrical energy values and/or the determined temperature values,
wherein during production a first series of subsequent container bodies are welded with a predetermined, substantially constant, intensity of the welding current, by means of a control of the welding device, and that after this series of container bodies at least an individual container body (6) of the production series is welded with an intensity of the welding current, which decreases or increases during welding.

8. Welding device according to claim 7, **characterized in that** it can be determined by this device whether a set, substantially constant welding current intensity for container body production lies in a predetermined range between the welding current intensity for a weld which is too cold and the welding current intensity for a weld which is too hot.

9. Welding device according to claim 7 or 8, **characterized in that** a substantially constant welding current with a welding current intensity (a2) which lies in a predetermined range between the welding current intensity for a weld which is too cold and the welding current intensity for a weld which is too hot can be set by this welding device.

10. Welding device according to one of claims 7 to 9, **characterized in that** the changing welding current can be generated with linearly decreasing or increasing current intensity (30), or **in that** the changing welding current can be generated with at least two current intensity ranges (31, 32) with different gradients of decreasing or increasing current intensity.

11. Welding device according to one of claims 7 to 10, **characterized in that** the welding current and the electrical voltage drop across the welding electrodes (21, 22) can be determined by the device (25) for multiple detection of the electrical energy for each welding lens or selected welding lenses of the welding seam.

12. Welding device according to one of claims 7 to 11, **characterized in that** the temperature along the welding seam can be measured with an infrared thermometer by the device (25) for multiple detection.

## Revendications

1. Procédé pour évaluer l'intensité du courant de soudage (a1) appliqué lors du soudage électrique par résistance de joints à recouvrement de corps de récipient successifs (1-11) d'une série de production, **caractérisé en ce que** pendant la production une première série de corps de récipient successifs (1-5) sont soudés avec une intensité de courant de soudage prédéterminée (a1), essentiellement constante, à l'aide d'une commande de la machine de soudage, **en ce qu'**après cette série de corps de récipient (1-5), au moins un corps de récipient individuel (6) de la série de production est soudé avec une intensité de courant de soudage (30) qui diminue ou augmente pendant le soudage (30; 31, 32) à l'aide de la commande et que, pendant ce soudage, l'énergie électrique est déterminée plusieurs fois et/ou la température de la soudure est déterminée plusieurs fois, et que, sur la base des valeurs d'énergie électrique déterminées et/ou des valeurs de température déterminées, il est déterminé sur la base des valeurs limite pour l'énergie ou bien la température, à partir de quelle intensité de courant de soudage le soudage du corps de récipient individuel (6) a été effectué trop froid et à partir de quelle intensité de courant de soudage le soudage a été effectué trop chaud et que, sur la base de cette détermination, une plage préférentielle pour l'intensité du courant de soudage est déterminée à l'intérieur de ces limites.

2. Procédé selon la revendication 1, **caractérisé en ce qu'**il est en outre vérifié si l'intensité de courant de soudage constante réglée (a1) se trouve à une distance prédéterminée de l'intensité de courant de soudage pour le soudage trop froid et de l'intensité de courant de soudage pour le soudage trop chaud et en particulier si l'intensité de courant de soudage réglée se trouve dans la plage préférée.

3. Procédé selon la revendication 2, **caractérisé en ce que** la position de l'intensité de courant de soudage constante réglée (a1) est enregistrée à des fins d'assurance qualité, et en particulier est déterminée et enregistrée périodiquement.

4. Procédé selon l'une des revendications 1 à 3, **caractérisé en ce qu'**après le soudage du corps de récipient individuel (6), une intensité de courant de soudage (a2) modifiée et essentiellement constante est réglée, qui se situe entre l'intensité du courant de soudage de la soudure froide et l'intensité du courant de soudage de la soudure chaude et est choisie en fonction de ces intensités de courant de soudage, et **en ce que** cette nouvelle intensité de courant de soudage essentiellement constante (a2) est appliquée à une série de corps de récipient (7-11) de la série de production suivant le corps de récipient individuel (6).

5. Procédé selon l'une des revendications 1 à 4, **caractérisé en ce que** pendant le soudage du au moins un corps de récipient (6) l'intensité du courant de soudage (30) est choisie de manière à diminuer ou à augmenter de manière essentiellement linéaire, ou **en ce que** pendant le soudage du au moins un corps de récipient (6) l'intensité du courant de soudage présente au moins deux zones (31, 32) avec des gradients différents de diminution ou d'augmentation.

6. Procédé selon l'une des revendications 1 à 5, **caractérisé en ce que** l'énergie électrique est déterminée en déterminant le courant de soudage et la chute de tension électrique aux bornes des électrodes de soudage (21, 22) pour chaque lentille de soudage ou des lentilles de soudage sélectionnées de la soudure.

7. Dispositif de soudage (20) pour le soudage par résistance de corps de récipient (1-11), comprenant des rouleaux de soudage (21, 22), un générateur de courant de soudage (24) et une commande de courant de soudage (23) ainsi qu'un dispositif (25) pour la détection multiple de l'énergie électrique le long de la soudure d'un corps de récipient (6) et/ou pour la détection multiple de la température de la soudure le long de la soudure d'un corps de récipient, **caractérisé en ce que** la commande de courant de soudage (23) et/ou le générateur de courant de soudage (24) peuvent être utilisés pour modifier l'intensité du courant de soudage pendant le soudage de la soudure d'un corps de récipient (6), et **en ce que** le dispositif (25) de détection multiple et la commande de courant de soudage peuvent être utilisés pour déterminer une soudure trop chaude et une soudure trop froide au moyen du courant de soudage variable sur la base des valeurs d'énergie électrique déterminées et/ou des valeurs de température déterminées,
pendant la production une première série de corps de récipient successifs étant soudée avec une intensité de courant de soudage prédéterminée, essentiellement constante, à l'aide d'une commande de la machine de soudage, et après cette série de corps de récipient, au moins un corps de récipient individuel (6) de la série de production étant soudé avec une intensité de courant de soudage qui diminue ou augmente pendant le soudage.

8. Dispositif de soudage selon la revendication 7, **caractérisé en ce que** ce dispositif de soudage permet de déterminer si une intensité du courant de soudage réglée et essentiellement constante pour la production de corps de récipient se situe dans une plage prédéterminée entre l'intensité du courant de soudage pour une soudure trop froide et l'intensité du courant de soudage pour une soudure trop chaude.

9. Dispositif de soudage selon la revendication 7 ou 8, **caractérisé en ce que** ce dispositif de soudage permet de régler un courant de soudage essentiellement constant avec une intensité de courant (a2) qui se situe dans une plage prédéterminée entre l'intensité du courant de soudage pour une soudure trop froide et l'intensité du courant de soudage pour une soudure trop chaude.

10. Dispositif de soudage selon l'une des revendications 7 à 9, **caractérisé en ce que** ce courant de soudage changeant peut être généré avec une intensité de courant linéairement décroissante ou croissante (30), ou **en ce que** le courant de soudage changeant peut être généré avec au moins deux gammes d'intensité de courant (31, 32) avec différents gradients d'intensité de courant décroissant ou croissant.

11. Dispositif de soudage selon l'une des revendications 7 à 10, **caractérisé en ce que** le courant de soudage et la chute de tension électrique aux bornes des électrodes de soudage (21, 22) peuvent être déterminés par le dispositif (25) de détection multiple de l'énergie électrique pour chaque lentille de soudage ou pour des lentilles de soudage sélectionnées de la soudure.

12. Dispositif de soudage selon l'une des revendications 7 à 11, **caractérisé en ce que** la température le long de la soudure peut être mesurée avec un thermomètre infrarouge par le dispositif (25) de détection multiple.
